(19) **Europäisches Patentamt**
**European Patent Office**
**Office européen des brevets**

(11) **EP 3 940 832 A1**

(12) **EUROPEAN PATENT APPLICATION**

(43) Date of publication:
**19.01.2022 Bulletin 2022/03**

(21) Application number: **20201254.8**

(22) Date of filing: **12.10.2020**

(51) International Patent Classification (IPC):
*H01M 8/1044* (2016.01)  *H01M 8/1023* (2016.01)
*H01M 8/1069* (2016.01)  *H01M 8/1088* (2016.01)
*H01M 8/18* (2006.01)  *H01M 8/22* (2006.01)
*H01M 8/1018* (2016.01)

(52) Cooperative Patent Classification (CPC):
**H01M 8/1023; H01M 8/1044; H01M 8/1083;**
**H01M 8/1088; H01M 8/18; H01M 8/227;**
H01M 2008/1095; H01M 2300/0082;
H01M 2300/0091; Y02E 60/50; Y02P 70/50

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.07.2020 KR 20200087676**

(71) Applicant: **Korea Petrochemical Ind. Co., Ltd.**
**Seoul 03035 (KR)**

(72) Inventors:
• **JEONG, Sung Kuk**
**44732 ULSAN (KR)**

• **PARK, Yoon Hyun**
**44662 ULSAN (KR)**
• **SON, Ho Jin**
**44644 ULSAN (KR)**
• **KANG, Gil Soon**
**05555 SEOUL (KR)**
• **JEONG, Young Tae**
**06638 SEOUL (KR)**

(74) Representative: **Cabinet Laurent & Charras**
**Le Contemporain**
**50 Chemin de la Bruyère**
**69574 Dardilly Cedex (FR)**

(54) **POLYMER ELECTROLYTE MEMBRANE AND METHOD FOR MANUFACTURING THE SAME**

(57) According to an embodiment, there is provided a polymer electrolyte membrane, comprising a polymer film including a styrene-based resin, a polyolefin-based resin, and an olefin-based elastomer resin. The polymer film is bonded with a sulfonic acid group (-SO3H) capable of cation exchange through a sulfonation reaction.

**EP 3 940 832 A1**

**Description**

## TECHNICAL FIELD

Embodiments of the disclosure relate to a polymer electrolyte membrane, and more particularly, to a polymer electrolyte membrane having ion mobility characteristics, obtained by mixing, at an optimized mass ratio, a styrene-based resin, a polyolefin-based resin, and an olefin-based elastomer to thereby prepare a membrane through extrusion processing, and sulfonating the membrane, and a method of manufacturing the same.

## DISCUSSION OF RELATED ART

The polymer electrolyte membrane may be classified into a fluorine-based polymer electrolyte membrane and a hydrocarbon-based polymer electrolyte membrane, and Nafion (Dupont) is a typical commercially available fluorine-based polymer electrolyte membrane. Nafion has excellent electrochemical properties but, due to its weak mechanical strength, may cause tiny pores and deteriorate the performance of the fuel cell (Korean Patent Application Publication No. 10-2012-0134236). Further, Nafion was found to suffer from high production costs due to its complex manufacturing process and an increase in the solubility of hydrogen and oxygen in the separator due to the amorphous region in Nafion (Polymer Science and Technology Vol. 14, No.4). Also, fluorine-based polymers are under environmental regulations.

To overcome these shortcomings, there is an attempt to commercialize a polymer electrolyte composite membrane obtained by impregnating a porous support made of a material, such as polyethylene (PE), polypropylene (PP), polydifluoride (PVDF), and polytetrafluoroethylene (PTFE) with an ionomer in the form of sulfuryl fluoride, but commercialization is still far away (Korean Patent Application Publication No. 10-2018-0115619). In addition, upon impregnation between the support and the ionomer, fine pores may be formed, causing performance degradation.

As for the hydrocarbon-based polymer electrolyte membrane, Neosepta (ASTOM, Japan) is representative of the ion exchange membrane field except for fuel cells. Neosepta is a sulfonated styrene-divinyl benzene copolymer electrolyte membrane that exhibits relatively high electrical conductivity (Korean Patent Application Publication No. 10-2004-0013627). However, sulfonated styrene has a stiff molecular structure, which increases brittleness in dry conditions and may thus be easily brittle. In order to overcome these drawbacks, better mechanical stability may be achieved by increasing the thickness of the polymer electrolyte membrane, but this way may increase the resistance of the high molecular electrolyte membrane, significantly reducing ion mobility. The need for considering both mechanical stability and ion mobility renders thinning difficult.

In order to address these issues, there is ongoing vigorous research efforts on polymer electrolyte composite membranes such as sulfonated polyetheretherketone (SPEEK), sulfonated polybenzimidazole (SPBI), and sulfonated polysulfone (SPSf). As mentioned in relation to the fluorine-based polymer, a study is underway to prepare a polymer electrolyte composite membrane by impregnating a porous support with a sulfone-based compound or applying a sulfone-based compound to a support and then performing radiation (Korean Patent Application Publication No. 10-2016-0178888). However, it is still difficult to commercialize due to low mechanical properties compared to high ion mobility.

## SUMMARY

According to embodiments of the disclosure, there may be provided a polymer electrolyte membrane which has superior mechanical properties and ion conductivity and may be mass-produced by a simplified process, and a method for manufacturing the same.

According to an embodiment, there is provided a polymer electrolyte membrane, comprising a polymer film including a styrene-based resin, a polyolefin-based resin, and an olefin-based elastomer resin. The polymer film is bonded with a sulfonic acid group (-SO3H) capable of cation exchange through a sulfonation reaction.

The styrene-based resin, the polyolefin-based resin, and the olefin-based elastomer resin may be mixed in a weight ratio of 20 to 50:50 to 75:0 to 10, respectively.

The styrene-based resin may be one or more selected from the group consisting of polystyrene (PS), acrylonitrile-butadiene-styrene (ABS), styrene-ethylene-butylene-styrene (SEBS), styrene-butadiene-styrene (SBS), and styrene-butadiene-rubber (SBR).

The polyolefin-based resin may be one or more selected from the group consisting of polypropylene (PP), linear low density polyethylene (LLDPE), low density polyethylene (LDPE), high density polyethylene (HDPE), ultra-high molecular weight polyethylene (UHMWPE), polymethylpentene (PMP), and cyclic olefin copolymer (COC).

The olefin-based elastomer resin may be one or more selected from the group consisting of ethylene-propylene rubber (EPR) and ethylene-propylene-non-conjugated diene rubber (EPDM).

The polymer electrolyte membrane may have an ion conductivity (IC) of 60mS/cm or more at 80°C and an ion exchange capacity (IEC) of 0.9 meq/g or more.

According to an embodiment, a method for manufacturing a polymer electrolyte membrane comprises a first step of preparing a mixture by blending a styrene-based resin, a polyolefin-based resin, and an olefin-based elastomer resin in a weight ratio of 20 to 50: 50 to 75: 0 to 10, respectively, a second step of putting the mixture into an extruder and preparing pellets, a third step of preparing a polymer film by performing inflation, casting, biaxial stretching, lamination, and bottom-up inflation extrusion processing on the pellets, and a fourth step of bonding the polymer film with a sulfonic acid group (-SO3H) via a sulfonation reaction using a sulfone solution and a solvent.

The polymer film may have a thickness ranging from $5\mu m$ to $200\mu m$.

The sulfone solution may be one selected from the group consisting of sulfuric acid, fuming sulfuric acid, chlorosulfonic acid, and acetylsulfate, and wherein the solvent is one or more selected from the group consisting of methylene chloride (MC), ethylene dichloride (EDC), dimethyl sulfoxide (DMSO), and dimethylacetamide (DMAC).

The sulfonation reaction may include immersing the polymer film in a sulfone solution at 25°C to 60°C for 1 to 4 hours to perform the sulfonation reaction and then re-immersing the polymer film in a 0.5M sodium hydroxide (NaOH) aqueous solution for 2 hours to terminate the sulfonation reaction.

According to an embodiment, the polymer electrolyte membrane has better mechanical properties and ion conductivity than those of commercially available ion exchange membranes and may be mass-produced by a simplified process.

Accordingly, the polymer electrolyte membrane according to an embodiment may be advantageously used for redox flow cells, electrolysis, electrodialysis, diffusion dialysis, as well as fuel cell separators.

## BRIEF DESCRIPTION OF THE DRAWINGS

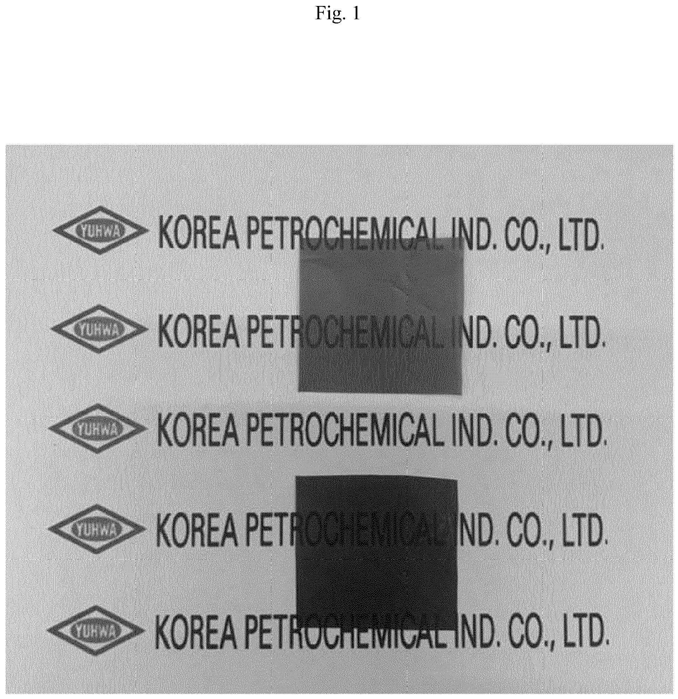

Fig. 1 is a photo illustrating a polymer electrolyte membrane according to an embodiment; and

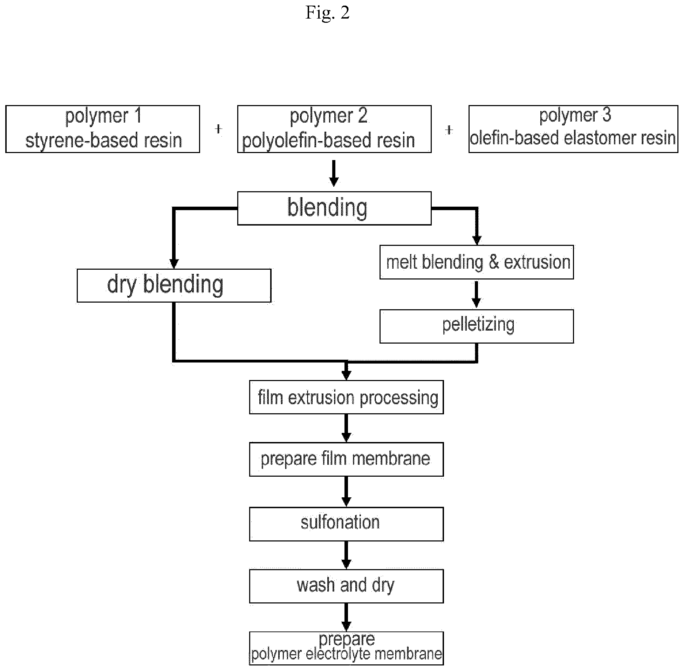

Fig. 2 is a flowchart illustrating a method for manufacturing a polymer electrolyte membrane according to an embodiment.

## DETAILED DESCRIPTION OF EXEMPLARY EMBODIMENTS

Hereinafter, embodiments of the disclosure are described in detail with reference to the accompanying drawings. Relevant known configurations or functions may be excluded from the description of the present invention.

The terms used herein should be interpreted not in typical or dictionary definitions but to comply in concept with the technical matters of the present invention.

The configurations disclosed in the specification and the drawings are mere examples and do not overall represent the technical spirit of the present invention. Therefore, various changes may be made thereto, and equivalents thereof also belong to the scope of the present invention.

According to an embodiment, there are provided a polymer electrolyte membrane, comprising a polymer film including a styrene-based resin, a polyolefin-based resin, and an olefin-based elastomer resin, wherein the polymer film is bonded with a sulfonic acid group (-SO3H) capable of cation exchange through a sulfonation reaction, and a method for manufacturing the polymer electrolyte membrane.

Hereinafter, embodiments of the present invention are described in detail.

According to an embodiment, a polymer film is prepared by mixing a styrene-based resin and a thermoplastic resin, such as a polyolefin-based resin and an olefin-based elastomer resin in an optimal ratio, performing melt extrusion, using a plastic processing machine, such as a single screw or twin screw extruder, at a temperature of 170°C to 250°C and then cooling and pelletizing, and inflation, casting, biaxially oriented polypropylene (BOPP) lamination on the pellets (melt blending) and non-melted compound (dry blending).

The styrene-based resin, polyolefin-based resin, and olefin-based elastomer resin are preferably mixed in a weight ratio of 20 to 50: 50 to 75: 0 to 10, respectively, and when the weight ratio of the styrene-based resin exceeds that of the polyolefin-based resin, miscibility with the polyolefin-based resin may be lowered, causing a lowering of mechanical strength.

The styrene-based resin may be combined with a hydrophilic functional group, such as a sulfonic acid group (-SO3H). As the styrene-based resin, there may be used one or more selected from the group consisting of polystyrene (PS), acrylonitrile-butadiene-styrene (ABS), styrene-ethylene-butylene-styrene (SEBS), styrene-butadiene-styrene (SBS), and styrene-butadiene-rubber (SBR), but is not limited thereto. According to an embodiment, it may be most preferable to use styrene-ethylene-butylene-styrene (SEBS). The melt index (MI, temperature: 190°C, load: 2.16kg) of the styrene-based resin is preferably 50g/10 minutes or less, and a styrene-based resin manufactured by, or commercially available from, Asahi Kasei, TSRC, Kuraray, LG Chem, or Kumho Polychem may be used.

The polyolefin-based resin serves to maintain mechanical properties and control gas permeability. As the polyolefin-based resin, there may be used one or more selected from the group consisting of polypropylene (PP), linear low density polyethylene (LLDPE), low density polyethylene (LDPE), high density polyethylene (HDPE), ultra-high molecular weight polyethylene (UHMWPE), polymethylpentene (PMP), and cyclic olefin copolymer (COC), but is not limited thereto. The melt index (MI, temperature: 190°C, load: 2.16 kg) of the polyolefin-based resin is preferably 100 g/10 min. or less.

The olefin-based elastomer resin may be used for the purpose of supplementing the impact strength and elastic properties of the polymer electrolyte membrane. As the olefin-based elastomer resin, there may be used one or more selected from the group consisting of ethylene-propylene rubber (EPR) and ethylene-propylene-non-conjugated diene rubber (EPDM), but is not limited thereto.

Two methods may be used to blend the styrene-based resin and the thermoplastic resins. The first method is dry blending which mixes the styrene-based resin and the thermoplastic resins (polyolefin and olefin-based elastomer) at a certain ratio, kneads the mixture at room temperature, and evenly or uniformly distributes the materials using a ribbon blender, paddle blender, verticle blender, or tumble blender.

The second method is melt blending in which the materials to be blended are melted by applying heat above the melting temperature and then kneaded by mechanical force. The styrene-based resin and thermoplastic resins (polyolefin and olefin-based elastomer) are put into a single screw extruder or twin screw extruder and undergo melt blending at a screw speed of 200rpm to 500 rpm, an extruder cylinder temperature of 170°C to 200°C, and a die temperature of 200°C to 250°C. When the screw flight length-screw outer diameter ratio (L/D) of the film processing extruder is large, it is preferable to use dry blending. When melt-blended materials are put into an extruder with a large L/D, additional polymer degradation may be caused, resulting in film property degradation.

It is preferable to adopt a melt blending method, according to an embodiment.

The pelletizing process is to prepare pallets by passing the molten resins extruded during melt blending through a water bath to perform strand cutting.

The strand-cut materials or dry-blended materials are formed into a polymer film by inflation, casting, biaxial-stretching (BOPP) or lamination. The polymer film may be manufactured to a thickness of 20 $\mu$m to 150 $\mu$m. According to an embodiment, it may be most preferable to manufacture the polymer film to a thickness of 90 $\mu$m to 100 $\mu$m using an inflation film processing method.

The sulfonation reaction may be optionally performed on the polymer film. For example, the sulfonation reaction may be performed in a styrene-based domain but may not in a polyolefin-based domain having chemical resistance. The sulfonation reaction may be performed through a nucleophilic substitution reaction between the benzene region and the sulfonic acid in the styrene-based domain.

The polymer film may undergo a sulfonation reaction through immersion in a sulfone solution for a predetermined time and at a predetermined temperature and, as sulfonic acid groups (-SO3H) are attached to the inner and outer surfaces of the polymer film, the polymer film has ion mobility.

Here, the sulfone solution required for the sulfonation reaction may be preferably prepared at a concentration of 0.5M to 2.0M by dissolving in a solvent. If a high-concentration sulfone solution is used, the degree of sulfonation may be increased, but swelling may occur and it may thus be difficult to manufacture a polymer electrolyte membrane.

As the sulfone solution, sulfuric acid, fuming sulfuric acid, chlorosulfonic acid, or acetylsulfate may be used. According to an embodiment, it is preferable to use chlorosulfonic acid as the sulfone solution.

As the solvent, methylene chloride (MC), ethylene dichloride (EDC), dimethyl sulfoxide (DMSO), or dimethylacetamide (DMAC) may be used, or two or more of these solvents may be used. According to an embodiment, it is preferable to use ethylene dichloride as the solvent. Ethylene dichloride may act to widen the distance between the polymer chains, maximizing the sulfonation reaction even to the inside of the polymer electrolyte membrane.

After impregnating the polymer film in the sulfone solution, a sulfonation reaction is performed at 20°C to 50°C for 1 to 2 hours, preparing a polymer electrolyte membrane containing a sulfonyl group. According to an embodiment, it is preferable to perform the sulfonation reaction at 25°C for one hour.

Immediately after the sulfonation reaction, to terminate the reaction, the polymer electrolyte membrane may be immersed in 0.5M NaOH aqueous solution for 1 to 2 hours and may then be sufficiently washed with ultrapure water and stored in 0.5N NaCl solution.

According to an embodiment, the polymer electrolyte membrane may be prepared by kneading a styrene-based resin, a polyolefin-based resin, and an olefin-based elastomer in an optimal ratio and then performing extrusion processing. A sulfonic acid group (-SO3H) is introduced using a sulfonation reaction. Thus, the thus-prepared polymer electrolyte membrane has ion mobility and mechanical properties superior to those of commercially available fluorine-based separators, and may be mass-produced by a simplified process.

Accordingly, the polymer electrolyte membrane according to an embodiment may be advantageously used for redox flow cells, electrolysis, electrodialysis, diffusion dialysis, as well as fuel cell separators.

The disclosure is now described in further detail in connection with embodiments thereof. The embodiments are provided merely to specifically describe the present invention, and it is obvious to one of ordinary skill in the art that the scope of the present invention is not limited to the embodiments.

Embodiment 1: manufacture a polymer electrolyte membrane

(1) A high-density polyethylene resin (HDPE, melt index not more than 1g/10min), a styrene-ethylene-butadiene-styrene (SEBS, melt index not more than 5g/10min) resin, and an ethylene-propylene non-conjugated diene rubber (EPDM, Mooney Viscosity not more than 50) resin were sufficiently mixed in advance, with their mass ratios (or weight ratios) adjusted to 50:50:0 (embodiment 1-1), 60:40:0 (embodiment 1-2), 70:30:0 (embodiment 1-3), and 50:40:10 (embodiment 1-4).

(2) The mixture of (1) was put into an extruder having a cylinder temperature of 185°C and a die temperature of 225°C and pelletized by strand cutting.

(3) The obtained pellets were put into an extruder having a cylinder temperature of 210°C and a circular die temperature of 245°C and processed into a polymer film having a thickness of 90$\mu$m to 100$\mu$m by bottom-up inflation processing.

(4) A 0.75M chlorosulfonic acid/ethylene dichloride solution was prepared.

(5) The polymer film prepared in (3) was immersed in the solution of (4) at 25°C for one hour and underwent a sulfonation reaction and, to terminate the reaction, was re-immersed in a 0.5M sodium hydroxide (NaOH) aqueous solution for 2 hours. Then, the polymer film was washed with an ultrapure water solution to thereby prepare a sulfonated polymer electrolyte membrane.

Comparative example: measure the properties of a polymer electrolyte membrane

The thickness, water content (moisture content or water uptake (WU)), ion exchange capacity (IEC), ion conductivity, tensile strength, and tear strength of the polymer electrolyte membrane prepared in the above embodiment were measured. As comparative polymer electrolyte membranes, commercially available Nafion 115 and Nafion 212 membranes were used. The thickness of the Nafion 115 membrane was 127$\mu$m, and the thickness of the Nafion 212 membrane was 50$\mu$m.

The measurement results are shown in Table 1.

| | resin composition (weight%) | | | water content (weight%) | ion exchange capacity (meq/g) | ion conductivity (mS/cm) | | | tensile strength kgf/cm2 | tear strength Kgf |
|---|---|---|---|---|---|---|---|---|---|---|
| | HDPE | SEBS | EPDM | | | 25°C | 50°C | 80°C | | |
| embodiment 1-1 | 50 | 50 | - | 45.0 | 1.7 | 41.7 | 59.1 | 110.2 | 180 | 78 |
| embodiment 1-2 | 60 | 40 | - | 38.0 | 1.5 | 37.3 | 47.2 | 99.0 | 190 | 112 |
| embodiment 1-3 | 70 | 30 | - | 20.0 | 1.0 | 26.9 | 33.1 | 49.0 | 210 | 131 |
| embodiment 1-4 | 50 | 40 | 10 | 22.0 | 1.0 | 34.8 | 51.5 | 93.7 | 140 | 160 |
| comparative example 1 (Nafion 115) | - | - | - | 39.0 | 1.1 | 32.3 | 53.0 | 63.4 | 140 | 7 |
| comparative example 2 (Nafion 212) | - | - | - | 45.0 | 1.0 | 35.3 | 52.0 | 70.7 | 120 | 5 |

As shown in Table 1, the water content, ion conductivity, tensile strength, and tear strength of the polymer electrolyte membrane of embodiment 1-2 are superior to those of Nafion 115 and 212 of the comparative example.

It is also shown that embodiment 1-1 is superior to the comparative example in ion exchange capacity, tensile strength, and tear strength and that embodiment 1-3 is significantly superior to the comparative example in tensile strength and tear strength. It may also be shown that the tear strength is improved by adding an elastomer resin (embodiment 1-4).

For reference, in connection with Table 1, the physical properties of the polymer electrolyte membrane were analyzed by the following methods.

The water content was calculated by dividing the difference in weight between the wet film and the film dried in an 80°C oven for 24 hours by the weight of the dried film.

$$\text{water content} = (\text{weight of wet film} - \text{weight of dried film})/(\text{weight of dried film}) \times 100\%$$

The ion conductivity (S/cm) is measured using an impedance analyzer (e.g., Hewlett Packard Corp. 4192 A). The polymer electrolyte membrane is bound between two platinum electrodes, and alternating current (AC) passes through the membrane plane. The evaluation temperature varies from 25°C to 80°C. The ion conductivity was calculated from the following equation using the measured Nyquist plot.

$$\delta \text{ (ion conductivity)} = (d \text{ (distance between the platinum electrodes)})/(R \text{ (resistance of the}$$

$$\text{electrolyte film resistance)} * S \text{ (cross-sectional area of the electrolyte film))}$$

For the ion exchange capacity (IEC), the polymer electrolyte membrane was immersed in a 0.2M sodium chloride (NaCl) solution for 24 hours and was then pulled out and dried, and then its weight was measured. A small amount of phenolphthalein was added to the sodium chloride solution, and a 0.005M sodium hydroxide (NaOH) solution was added to the sodium chloride (NaCl) solution. The volume of the sodium hydroxide (NaOH) solution injected at the moment the sodium chloride (NaCl) solution turned red was measured by the following equation:

$$IEC(meg/g) = (V_{NaOH} * M_{NaOH})/W_{dry}$$

$V_{NaOH}$ = volume (ml) of aqueous NaOH solution until color changes
$M_{NaOH}$ = NaOH aqueous solution molar concentration
$W_{dry}$ = mass (g) of dried ion exchange membrane

Tensile strength was measured according to ASTM D882.

Tear strength was measured according to ASTM D1004.

Mooney viscosity was measured according to ASTM D1646.

The melt index (MI) was measured according to ASTM D1238 (temperature: 190°C load: 2.16kg).

Although preferred embodiments of the present invention have been shown and described in connection with the drawings and particular terms have been used, this is to provide a better understanding of the present invention and is not intended to limit the scope of the present invention.

It is apparent to one of ordinary skill in the art that various changes may be made thereto without departing from the scope of the present invention.

**Claims**

1.  A polymer electrolyte membrane, comprising a polymer film including a styrene-based resin, a polyolefin-based resin, and an olefin-based elastomer resin, wherein the polymer film is bonded with a sulfonic acid group (-SO3H) capable of cation exchange through a sulfonation reaction.

2.  The polymer electrolyte membrane of claim 1, wherein the styrene-based resin, the polyolefin-based resin, and the olefin-based elastomer resin are mixed in a weight ratio of 20 to 50:50 to 75:0 to 10, respectively.

3. The polymer electrolyte membrane of claim 1, wherein the styrene-based resin is one or more selected from the group consisting of polystyrene (PS), acrylonitrile-butadiene-styrene (ABS), styrene-ethylene-butylene-styrene (SEBS), styrene-butadiene-styrene (SBS), and styrene-butadiene-rubber (SBR).

4. The polymer electrolyte membrane of claim 1, wherein the polyolefin-based resin is one or more selected from the group consisting of polypropylene (PP), linear low density polyethylene (LLDPE), low density polyethylene (LDPE), high density polyethylene (HDPE), ultra-high molecular weight polyethylene (UHMWPE), polymethylpentene (PMP), and cyclic olefin copolymer (COC).

5. The polymer electrolyte membrane of claim 1, wherein the olefin-based elastomer resin is one or more selected from the group consisting of ethylene-propylene rubber (EPR) and ethylene-propylene-non-conjugated diene rubber (EPDM).

6. The polymer electrolyte membrane of claim 1, wherein the polymer electrolyte membrane has an ion conductivity (IC) of 60mS/cm or more at 80°C and an ion exchange capacity (IEC) of 0.9 meq/g or more.

7. A method for manufacturing a polymer electrolyte membrane, the method comprising:

a first step of preparing a mixture by blending a styrene-based resin, a polyolefin-based resin, and an olefin-based elastomer resin in a weight ratio of 20 to 50: 50 to 75: 0 to 10, respectively;
a second step of putting the mixture into an extruder and preparing pellets;
a third step of preparing a polymer film by performing inflation, casting, biaxial stretching, lamination, and bottom-up inflation extrusion processing on the pellets; and
a fourth step of bonding the polymer film with a sulfonic acid group (-SO3H) via a sulfonation reaction using a sulfone solution and a solvent.

8. The method of claim 7, wherein the polymer film has a thickness ranging from $5\mu$m to $200\mu$m.

9. The method of claim 7, wherein the sulfone solution is one selected from the group consisting of sulfuric acid, fuming sulfuric acid, chlorosulfonic acid, and acetylsulfate, and wherein the solvent is one or more selected from the group consisting of methylene chloride (MC), ethylene dichloride (EDC), dimethyl sulfoxide (DMSO), and dimethylacetamide (DMAC).

10. The method of claim 7, wherein the sulfonation reaction includes immersing the polymer film in a sulfone solution at 25°C to 60°C for 1 to 4 hours to perform the sulfonation reaction and then re-immersing the polymer film in a 0.5M sodium hydroxide (NaOH) aqueous solution for 2 hours to terminate the sulfonation reaction.

Fig. 1

Fig. 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOKRINI A ET AL: "Non-fluorinated proton-exchange membranes based on melt extruded SEBS/HDPE blends", JOURNAL OF MEMBRANE SCIENCE, ELSEVIER BV, NL, vol. 325, no. 2, 1 December 2008 (2008-12-01), pages 749-757, XP025655196, ISSN: 0376-7388, DOI: 10.1016/J.MEMSCI.2008.08.051 [retrieved on 2008-09-16] * page 750 * ----- | 1-10 | INV. H01M8/1044 H01M8/1023 H01M8/1069 H01M8/1088 H01M8/18 H01M8/22 ADD. H01M8/1018 |
| X | WO 2006/019029 A1 (KANEKA CORP [JP]; KUROMATSU HIDEKAZU [JP]; YAMANE TOMOKAZU [JP]) 23 February 2006 (2006-02-23) * claim all; examples 7,8 * ----- | 1-10 | |

TECHNICAL FIELDS
SEARCHED      (IPC)

H01M

The present search report has been drawn up for all claims

| Place of search | Date of completion of the search | Examiner |
|---|---|---|
| Munich | 24 March 2021 | Götz, Heide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 20 1254

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2021

| Patent document cited in search report | Publication date | Patent family member(s) | Publication date |
|---|---|---|---|
| WO 2006019029 A1 | 23-02-2006 | JP 4995568 B2<br>JP WO2006019029 A1<br>WO 2006019029 A1 | 08-08-2012<br>08-05-2008<br>23-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020120134236
- KR 1020180115619
- KR 1020040013627
- KR 1020160178888

### Non-patent literature cited in the description

- **NAFION.** *Polymer Science and Technology,* vol. 14 (4